(19) Europäisches Patentamt
European Patent Office
Office européen des brevets

(11) **EP 4 449 886 A1**

(12) **EUROPEAN PATENT APPLICATION**
published in accordance with Art. 153(4) EPC

(43) Date of publication:
**23.10.2024 Bulletin 2024/43**

(21) Application number: **22907447.1**

(22) Date of filing: **13.12.2022**

(51) International Patent Classification (IPC):
**A23L 27/00** (2016.01)    **A23L 5/00** (2016.01)

(52) Cooperative Patent Classification (CPC):
**A23L 5/00; A23L 27/00**

(86) International application number:
**PCT/JP2022/045890**

(87) International publication number:
**WO 2023/112923 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2021 JP 2021201434
10.05.2022 JP 2022077417**

(71) Applicant: **THE NISSHIN OILLIO GROUP, LTD.
Tokyo 104-8285 (JP)**

(72) Inventors:
• **AOYAGI, Kanji**
  **Yokohama-shi, Kanagawa 235-8558 (JP)**
• **SEKIGUCHI, Yoshinori**
  **Yokohama-shi, Kanagawa 235-8558 (JP)**
• **ISAKA, Daisuke**
  **Yokohama-shi, Kanagawa 235-8558 (JP)**
• **MURAYAMA, Noriko**
  **Yokohama-shi, Kanagawa 235-8558 (JP)**

(74) Representative: **Hasegawa, Kan
Patentanwaltskanzlei Hasegawa
Untere Hauptstraße 56
85354 Freising (DE)**

(54) **TASTE IMPROVING AGENT FOR FOOD OR BEVERAGE, AND METHOD FOR IMPROVING TASTE OF FOOD OR BEVERAGE**

(57)    An object of the present invention is to provide a taste improving agent for food and/or beverages that can improve the taste of saltiness and/or umami. Specifically, the present invention provides: a taste improving agent for food and/or beverages having a salty taste and/or umami, comprising: a linear saturated fatty acid having 12 to 16 carbon atoms as an active ingredient.

**EP 4 449 886 A1**

**Description**

Technical Field

The present invention relates to a taste improving agent for food and/or beverages, taste-improved food and/or beverages, a method for improving the taste of food and/or beverages, and a method for manufacturing taste-improved food and/or beverages.

Background Art

The taste of food is indispensable for enhancing appetite, and various seasonings have been used. For example, umami ingredients such as glutamic acid, inosinic acid, and guanylic acid are also well known as tastes of food and/or beverages. Also, for stir-fry cooking and the like, flavoring has been performed with seasonings containing salt such as table salt and soy sauce. If the taste of these seasonings could be improved, it would be possible to provide a stronger flavor to cooked foods or to reduce the amount of seasonings (salt). Therefore, there has been a demand for improving the taste of saltiness, umami, and the like.

In addition, excessive intake of some dietary constituents carries the risk of compromising health, and there is a tendency to refrain from their intake. In particular, since salt is considered to be one of the causes of hypertension and the like, it is required to control salt in the diet.

As a method for improving the salty taste, Patent Literature 1 proposes the use of acidic amino acids, basic amino acids, and organic acids such as succinic acid or salts thereof.

Citation List

Patent Literatures

Patent Literature 1: Japanese Patent Application Publication No. 2002-345430

Summary of Invention

Problems to be solved by the invention

However, organic acids and organic acid salts that improve the salty taste are water-soluble, and there were limitations on their applications, such as being usable only in aqueous food products.

An object of the present invention is to provide a taste improving agent for food and/or beverages that can improve the taste of saltiness and/or umami. Another object is to provide food and/or beverages with improved taste of saltiness and/or umami. A further object is to provide a method for improving the taste of food and/or beverages so that the taste of saltiness and/or umami is improved. Yet another object is to provide a method for manufacturing food and/or beverages with improved taste of saltiness and/or umami.

Means for solution of the problems

The present inventors conducted diligent studies to achieve the above objects. As a result, they have found that the taste of saltiness and/or umami is enhanced by incorporating linear saturated fatty acids having 12 to 16 carbon atoms into food and/or beverages. This led to the completion of the present invention below.

[1] A taste improving agent for food and/or beverages having a salty taste and/or umami, comprising: a linear saturated fatty acid having 12 to 16 carbon atoms as an active ingredient.

[2] The taste improving agent according to [1], which contains the linear saturated fatty acids having 12 to 16 carbon atoms in an amount of 8 to 7000 ppm by mass in the food and/or beverages.

[3] The taste improving agent according to [1] or [2], further comprising: an emulsifier having an HLB of 3.5 or less.

[4] Food and/or beverages having a salty taste and/or umami, containing the taste improving agent for food and/or beverages according to any one of [1] to [3], wherein the linear saturated fatty acids having 12 to 16 carbon atoms are contained in an amount of 8 to 7000 ppm by mass in the food and/or beverages.

[5] A method for improving the taste of food and/or beverages having a salty taste and/or umami, comprising: adding linear saturated fatty acids having 12 to 16 carbon atoms in an amount of 8 to 7000 ppm by mass to the food and/or beverages.

[6] The method for improving the taste of food and/or beverages according to [5], further comprising: adding an emulsifier having an HLB of 3.5 or less.

Furthermore, the present invention may also be as follows.

[1] A taste improving agent for food and/or beverages having a salty taste and/or umami, comprising: a linear saturated fatty acid having 12 to 16 carbon atoms as an active ingredient.
[2] The taste improving agent according to [1], wherein a content of the linear saturated fatty acid having 12 to 16 carbon atoms is 0.1 to 100% by mass relative to a total mass of the taste improving agent.
[3] The taste improving agent according to [1] or [2], further comprising: an emulsifier having an HLB of 4.5 or less.
[4] The taste improving agent according to any one of [1] to [3], wherein the taste is a salty taste and/or umami.
[5] Taste-improved food and/or beverages comprising food and/or beverages having a salty taste and/or umami and the taste improving agent according to any one of [1] to [4].
[6] The taste-improved food and/or beverages according to [5], wherein a content of the linear saturated fatty acid having 12 to 16 carbon atoms is 8 to 7000 ppm by mass relative to a total mass of the taste-improved food and/or beverages.
[7] The taste-improved food and/or beverages according to [5] or [6], wherein the taste is a salty taste and/or umami.
[8] A method for improving the taste of food and/or beverages, comprising: adding a linear saturated fatty acid having 12 to 16 carbon atoms to food and/or beverages having a salty taste and/or umami.
[9] The method for improving the taste of food and/or beverages according to [8], wherein the amount of the linear saturated fatty acid having 12 to 16 carbon atoms to be added is 8 to 7000 ppm by mass relative to a total mass of the taste-improved food and/or beverages after the addition of the linear saturated fatty acid.
[10] The method for improving the taste of food and/or beverages according to [8] or [9], further comprising: adding an emulsifier having an HLB of 4.5 or less to the food and/or beverages having a salty taste and/or umami.
[11] The method for improving taste according to any one of [8] to [10], wherein the taste is a salty taste and/or umami.
[12] A method for manufacturing taste-improved food and/or beverages, comprising: adding a linear saturated fatty acid having 12 to 16 carbon atoms to food and/or beverages having a salty taste and/or umami so as to prepare the taste-improved food and/or beverages.
[13] The manufacturing method according to [12], wherein the amount of the linear saturated fatty acid having 12 to 16 carbon atoms to be added is 8 to 7000 ppm by mass relative to a total mass of the taste-improved food and/or beverages.
[14] The manufacturing method according to [12] or [13], further comprising: adding an emulsifier having an HLB of 4.5 or less to the food and/or beverages having a salty taste and/or umami.
[15] The manufacturing method according to any one of [12] to [14], wherein the taste is a salty taste and/or umami.

Advantageous Effects of Invention

According to the present invention, it is possible to improve the taste of saltiness and/or umami of food and/or beverages. It is also possible to provide food and/or beverages in which the content of salty taste ingredients and/or umami ingredients in food and/or beverages has been reduced.

Description of Embodiments

The present invention is described in detail below. In the modes for carrying out the present invention, "A (value) to B (value)" means A or more and B or less. The preferable modes or more preferable modes exemplified below can be appropriately combined with each other irrespective of the expression of "preferable" or "more preferable". The numerical ranges described are examples, and irrespective of the expression of "preferable" or "more preferable", the upper limit and lower limit of each range and the numerical values in the Examples can be appropriately combined to form a preferable range. Furthermore, the terms "containing" or "comprises" may be appropriately read as "essentially consists of" or "consisting of'.

[Taste Improving Agent]

(Linear saturated fatty acids having 12 to 16 carbon atoms)

The taste improving agent of the present invention comprises a linear saturated fatty acid having 12 to 16 carbon atoms as an active ingredient. The linear saturated fatty acids having 12 to 16 carbon atoms, when coexisting with salty taste ingredients and/or umami ingredients in food and/or beverages, synergistically enhance the taste of saltiness and/or umami compared to food and/or beverages not containing the linear saturated fatty acids having 12 to 16 carbon atoms. Here, "taste" refers to tastes such as salty taste, umami, sweetness, sourness, and bitterness, as well as pungency, astringency, and the like. The taste improving agent of the present invention is intended particularly for enhancing salty taste and/or umami. It should be noted that even in cases where the content of salty taste ingredients and/or umami ingredients in food and/or beverages is reduced from the usual level and the linear saturated fatty acids having 12 to 16 carbon atoms, which are the active ingredient of the present invention, are added instead to maintain the taste of the original food and/or beverages, the taste improving agent of the present invention is effective in the sense that it enhances the taste that has been reduced.

The linear saturated fatty acids having 12 to 16 carbon atoms may be in the form of free fatty acids in the oral cavity, and can be used as free fatty acids and/or fatty acid salts. It is preferable that they are free fatty acids in the taste improving agent for food and/or beverages. Preferable examples of fatty acid salts include metal salts such as sodium fatty acid salts, potassium fatty acid salts, and calcium fatty acid salts. Preferable examples of the linear saturated fatty acids having 12 to 16 carbon atoms include lauric acid, myristic acid, and palmitic acid, with myristic acid being more preferable.

The taste improving agent of the present invention can improve the salty taste and/or umami of food and/or beverages by using the taste improving agent so that the linear saturated fatty acids having 12 to 16 carbon atoms are contained in an amount of 8 to 5000 ppm by mass in the food and/or beverages. It is preferable to use the taste improving agent so that the linear saturated fatty acids having 12 to 16 carbon atoms are 20 to 3000 ppm by mass in the food product, more preferably 200 to 3000 ppm by mass, and further preferably 250 or 300 to 800 ppm by mass. Also, it is preferable to incorporate the linear saturated fatty acids having 12 to 16 carbon atoms in an amount of 0.001 to 5 times by mass relative to the salty taste ingredients, more preferably 0.01 to 3 times by mass, further preferably 0.02 to 1 times by mass, and most preferably 0.005 to 0.4 times by mass. Also, it is preferable to incorporate the linear saturated fatty acids having 12 to 16 carbon atoms in an amount of 0.01 to 50 times by mass relative to the umami ingredients, more preferably 0.1 to 30 times by mass, further preferably 0.2 to 10 times by mass, and most preferably 0.05 to 4 times by mass.

The taste improving agent of the present invention preferably contains at least one type of linear saturated fatty acid having 12 to 16 carbon atoms in an amount of 0.1 to 99.9% by mass, more preferably 1 to 99% by mass, and further preferably 10 to 95% by mass. In this case, the remaining ingredients may be other types of linear saturated fatty acids having 12 to 16 carbon atoms. Alternatively, the remaining ingredients may be the emulsifier described later or other ingredients. The total content of the linear saturated fatty acids having 12 to 16 carbon atoms is preferably 0.1 to 100% by mass, more preferably 0.5 to 99% by mass, and further preferably 1 to 97% by mass or 1 to 95% by mass, relative to the total mass of the taste improving agent of the present invention.

(Emulsifier)

It is preferable that the taste improving agent of the present invention further contains an emulsifier having an HLB of 4.5 or less, or 3.5 or less. When the linear saturated fatty acids having 12 to 16 carbon atoms and an emulsifier having an HLB of 4.5 or less coexist, the taste of saltiness and/or umami can be further enhanced. Preferable examples of the emulsifier having an HLB of 4.5 or less include one or more selected from the group consisting of polyglycerol fatty acid esters, polyglycerol condensed ricinoleic acid esters, sucrose fatty acid esters, and sorbitan fatty acid esters.

The HLB is an abbreviation for Hydrophile Lipophile Balance, which is an indicator for knowing whether an emulsifier is hydrophilic or lipophilic, and takes a value from 0 to 20. The smaller the HLB value, the stronger the lipophilicity. In the present invention, the Atlas method is used for calculating the HLB value. The Atlas method calculates the HLB value from the following equation:

$$HLB = 20 \times (1\text{-}S/A)$$

S: Saponification value
A: Acid value of fatty acids in the ester

According to this calculation method, the HLB value is calculated as an arithmetic mean.

In the taste improving agent of the present invention, the HLB of the emulsifier to be contained is more preferably 3.5 or less, or 0 to 3.0, further preferably 0 to 2.5, and most preferably 1 to 2.

In the taste improving agent of the present invention, the emulsifier having an HLB of 4.5 or less is preferably 0.2 times by mass or more, more preferably 0.2 to 100 times by mass, further preferably 0.5 to 50 times by mass, and further preferably 1.0 to 10 times by mass, relative to the linear saturated fatty acids having 12 to 16 carbon atoms. Also, the content of the emulsifier having an HLB of 4.5 or less in the taste-improved food and/or beverages is preferably 0.01 to 5% by mass, more preferably 0.05 to 3% by mass, and further preferably 0.08 to 1% by mass.

The constituent fatty acids of the polyglycerol fatty acid esters, sucrose fatty acid esters, and sorbitan fatty acid esters, which are examples of the above-mentioned emulsifiers, are preferably linear fatty acids having 16 to 22 carbon atoms, and examples thereof include palmitic acid, stearic acid, behenic acid, oleic acid, linoleic acid, linolenic acid, erucic acid, and the like. It is preferable that 60% by mass or more of the constituent fatty acids are linear unsaturated fatty acids in order to prevent solidification at low temperatures. It is more preferable that 70 to 100% by mass of the constituent fatty acids are linear unsaturated fatty acids, and further preferable that 80 to 98% by mass of the constituent fatty acids are linear unsaturated fatty acids. As for the linear unsaturated fatty acids, linear unsaturated fatty acids having 16 to 22 carbon atoms can be used. Preferable examples of the linear unsaturated fatty acids include one or more fatty acids selected from the group consisting of oleic acid, linoleic acid, linolenic acid, and erucic acid. It is particularly preferable that 65 to 90% by mass of the constituent fatty acids are oleic acid and/or erucic acid. The constituent fatty acids other than the linear unsaturated fatty acids are linear saturated fatty acids. Preferable examples of the linear saturated fatty acids include linear saturated fatty acids having 6 to 22 carbon atoms, and more preferably linear saturated fatty acids having 16 to 18 carbon atoms. It should be noted that the constituent fatty acids of the polyglycerol condensed ricinoleic acid esters are almost entirely ricinoleic acid.

The polyglycerol fatty acid esters are compounds synthesized by esterifying polyglycerol with fatty acids. Commercially available products may be used as the polyglycerol fatty acid esters, and two or more may be used in combination. The polyglycerol used as a raw material for the polyglycerol fatty acid esters is generally obtained by using glycerol as a raw material, dehydrating and condensing it at a high temperature in the presence of an alkali catalyst such as caustic soda, and distilling, deodorizing, and breaching the product as necessary. These polyglycerols used as raw materials for the polyglycerol fatty acid esters are also called reaction polyglycerols, and are, in theory, mixtures of polyglycerols having different degrees of polymerization ranging from 1 to ∞, with a wide distribution of degrees of polymerization. Since polyglycerol fatty acid esters having a degree of polymerization of 4 or more are generally difficult to isolate, they are allowed to be mixtures of polyglycerol fatty acid esters having various degrees of polymerization.

In the present invention, the average degree of polymerization (percentage) indicates the degree of polymerization of the polyglycerol constituting the polyglycerol fatty acid esters. The average degree of polymerization (n) mentioned here can be derived, for example, from the following formula (Formula 1) and (Formula 2) calculated from the hydroxyl value of the polyglycerol used as a raw material for the polyglycerol fatty acid esters.

$$\text{(Formula 1) Molecular weight} = 74n + 18$$

$$\text{(Formula 2) Hydroxyl value} = 56110 \times (n+2)/\text{Molecular weight}$$

General polyglycerols are sold as tetraglycerol (average degree of polymerization of 4), hexaglycerol (average degree of polymerization of 6), decaglycerol (average degree of polymerization of 10), etc., based on the average degree of polymerization determined by the terminal group analysis method in which the hydroxyl value is measured. Therefore, the average degree of polymerization is a calculated value and may differ from the actual degree of polymerization.

The average degree of polymerization of the polyglycerol moiety of the polyglycerol fatty acid esters is preferably 4 to 12, more preferably 4 to 10, and further preferably 5 to 6.

The polyglycerol condensed ricinoleic acid esters are esters of polyglycerol and a polymer of ricinoleic acid, and can be obtained, for example, by an esterification reaction between ricinoleic acid, which is obtained mainly from castor oil, and polyglycerol. The polyglycerol moiety of the polyglycerol condensed ricinoleic acid esters has a distribution of degrees of polymerization in the same manner as the polyglycerol fatty acid esters described above, and is indicated by the average degree of polymerization. The average degree of polymerization of the polyglycerol moiety of the polyglycerol condensed ricinoleic acid esters is preferably about 2 to 12, more preferably about 2 to 10, and further preferably about 3 to 8.

Commercially available products may be used as the polyglycerol condensed ricinoleic acid esters. Examples of commercially available products include SY-Glyster CR-310, CR-500, CR-ED, CRS-75, etc. manufactured by Sakamoto Yakuhin Kogyo Co., Ltd., Sunsoft No. 818DG, 818R, 818SK, 818H, etc. manufactured by Taiyo Kagaku Co., Ltd., and Poem PR-300, etc. manufactured by Riken Vitamin Co., Ltd., which can be appropriately used. Two or more polyglycerol condensed ricinoleic acid esters may be used in combination.

The sucrose fatty acid esters and sorbitan fatty acid esters are esters of sucrose or sorbitan and fatty acids, and commercially available products can be used. Examples of commercially available products of sucrose fatty acid esters include RYOTO Sugar Ester POS-135 (sucrose-mixed fatty acid esters: oleic acid about 40%, palmitic acid about 30%, stearic acid about 30%), RYOTO Sugar Ester S-070 (sucrose stearic acid ester), RYOTO Sugar Ester 0-170 (sucrose oleic acid ester), RYOTO Sugar Ester ER-290 (sucrose erucic acid ester), etc. manufactured by Mitsubishi Chemical Corporation, which can be appropriately used. Examples of commercially available products of sorbitan fatty acid esters include RIKEMAL OR-85, RIKEMAL B-150, Poem S-65V, etc. manufactured by Riken Vitamin Co., Ltd.,

which can be appropriately used. Two or more sucrose fatty acid esters and sorbitan fatty acid esters may be used in combination.

(Other ingredients)

The taste improving agent of the present invention can include other ingredients as necessary. For example, edible oils and/or fats can be blended to make the taste improving agent have fluidity. The edible oils and/or fats are not particularly limited as long as they are suitable for food. Examples thereof include various vegetable oils and/or fats and animal oils and/or fats such as soybean oil, rapeseed oil, rice oil, sunflower oil, safflower oil, olive oil, canola oil, corn oil, cottonseed oil, sesame oil, palm oil, palm kernel oil, coconut oil, cocoa butter, peanut oil, hazelnut oil, macadamia nut oil, milk fat, beef tallow, pork lard (lard), as well as processed oils and/or fats obtained by subjecting these to one or two or more treatments selected from hydrogenation, fractionation, and interesterification, and synthetic oils such as medium chain fatty acid triglycerides. These oils and/or fats may be used alone or in combination of two or more. The edible oils and/or fats may be a purified oil, crude oil, or roasted oil, and is preferably a purified oil. It is preferable that the edible oils and/or fats are the remainder excluding the linear saturated fatty acids having 12 to 16 carbon atoms and the emulsifier having an HLB of 4.5 or less described above. For example, it is preferable to incorporate 50 to 99.9% by mass, and more preferably 60 to 99% by mass, in the taste improving agent.

The taste improving agent of the present invention can include additives such as antioxidants and thickeners as necessary. Examples of antioxidants include tocopherols, ascorbic acids, and the like. These ingredients can be appropriately formulated at a blending amount of 5% by mass or less, and more preferably at a blending amount of 1% by mass or less.

[Food and/or Beverages]

The food and/or beverages whose taste is improved by the present invention (i.e., raw materials for the taste-improved food and/or beverages) can be food and/or beverages having the taste of saltiness and/or umami. As long as it has the taste of saltiness and/or umami, it may be any beverage or food. The food and/or beverages also include aqueous solutions that simply contain salty taste ingredients and/or umami ingredients as taste ingredients. Specific examples of beverages include fruit drinks (juices), carbonated beverages, acidic beverages, sports drinks, tea, non-alcoholic beverages, functional beverages, soups, and the like. Specific examples of foods include plant-based foods, animal-based foods, synthetic foods, processed foods, retort foods, frozen foods, freeze-dried foods, instant foods, cooked foods, and the like. Examples of cooked foods include crab in tomato cream sauce, white sauce, cabbage stir-fried with cumin, potatoes stir-fried with curry, fried rice, shrimp pilaf, and the like.

The food and/or beverages of the present invention have the taste of saltiness and/or umami. The salty taste is a taste of sodium chloride, and is preferably the salty taste of table salt. Examples of table salt include purified salt, natural salt, natural salt, rock salt, and the like. Umami is a taste of glutamic acid, aspartic acid, inosinic acid, guanylic acid, and/or xanthylic acid, and may be salts thereof. It is preferably glutamic acid. These ingredients are appropriately added, and for example, the content of the salty taste or umami ingredients in the food and/or beverages is preferably 0.01 to 10% by mass, and more preferably 0.02 to 1% by mass. Particularly in the case of umami ingredients, it is further preferably 0.02 to 0.1 % by mass. Also, the content of the umami ingredients in the food and/or beverages is preferably 0.001 to 0.1% by mass, and more preferably 0.02 to 0.1% by mass.

The food and/or beverages may be in a solid or liquid state. Since the salty taste ingredients and umami ingredients are water-soluble, they are considered to exhibit their taste in an aqueous solution. Even in foods that do not contain moisture, the salty taste ingredients and umami ingredients can dissolve in saliva in the oral cavity and exert the effect of the present invention. On the other hand, food and/or beverages that contain 10% by mass or more of moisture, in which the salty taste ingredients, umami ingredients, and other taste ingredients can be dissolved in water in advance, are preferable for expressing the effect of the present invention, and food and/or beverages that contain 50% by mass or more of moisture are more preferable.

The taste-improved food and/or beverages according to the present invention contain the food and/or beverages having the above-mentioned salty taste and/or umami and the above-mentioned taste improving agent, and it is appropriate to contain the linear saturated fatty acids having 12 to 16 carbon atoms in an amount of 8 to 7000 ppm by mass in the taste-improved food and/or beverages. By containing the linear saturated fatty acids having 12 to 16 carbon atoms in an amount of 8 to 7000 ppm by mass in the taste-improved food and/or beverages, the salty taste and/or umami of the food and/or beverages can be strongly perceived. The content of the linear saturated fatty acids having 12 to 16 carbon atoms in the taste-improved food and/or beverages is preferably 10 to 5000 ppm by mass, more preferably 30 to 3000 ppm by mass, further preferably 200 to 2000 ppm by mass, and most preferably 250 or 300 to 800 ppm by mass.

[Method for Improving the Taste of Food and/or Beverages]

The method for improving taste according to the present invention includes adding linear saturated fatty acids having 12 to 16 carbon atoms, preferably in an amount of 8 to 7000 ppm by mass, to food and/or beverages having a salty taste and/or umami. It is more preferable to further add an emulsifier having an HLB of 4.5 or less. The content and blending amount of the linear saturated fatty acids having 12 to 16 carbon atoms and the emulsifier having an HLB of 4.5 or less are as described in the "[Taste Improving Agent]" section above. Also, the food and/or beverages are as described in the "[Food and/or Beverages]" section above. The method of addition may be a conventionally known method, and it is more preferable to mix after addition. Since the linear saturated fatty acids having 12 to 16 carbon atoms and the emulsifier having an HLB of 4.5 or less are oil-soluble, it is preferable to add both at the same time or add them as a mixture. It is especially preferable to add them at the same time as oils and/or fats or add them as a mixture with oils and/or fats. Since the linear saturated fatty acids having 12 to 16 carbon atoms are solid, it is preferable to add them while appropriately heating them. The heating temperature is preferably 40 to 100°C, and more preferably 45 to 80°C.

[Method for Manufacturing Food and/or Beverages]

The present invention further relates to a method for manufacturing taste-improved food and/or beverages, including a step of adding a linear saturated fatty acid having 12 to 16 carbon atoms to food and/or beverages having a salty taste and/or umami so as to prepare the taste-improved food and/or beverages. The method for manufacturing the taste-improved food and/or beverages may further include a step of adding an emulsifier having an HLB of 4.5 or less to the food and/or beverages having a salty taste and/or umami. Other conditions and preferable modes are as described in the "[Taste Improving Agent]", "[Food and/or Beverages]", and "[Method for Improving the Taste of Food and/or Beverages]" sections above.

Examples

The present invention is further described in detail by the following Examples. However, the present invention should not be interpreted as being limited to the content of the following Examples. Unless otherwise specified, the unit of blending amount in Tables 1 to 10 is % by mass relative to the total after blending.

[Taste Evaluation]

(Salty taste evaluation)

Table salt was used as the salty taste ingredient. Table salt was dissolved in water to prepare 0.3% by mass table salt aqueous solution, 0.5% by mass table salt aqueous solution, 0.6% by mass table salt aqueous solution, 0.7% by mass table salt aqueous solution, 0.9% by mass table salt aqueous solution, 1.0% by mass table salt aqueous solution, and 1.2% by mass table salt aqueous solution, respectively, as salty taste reference solutions. Each salty taste reference solution was taken into the mouth, and the perceived salty taste was defined as 1 to 7 points as follows. The evaluation samples were taken into the mouth, and the points were given based on the points of the salty taste reference solutions. The evaluation was performed by a panel of 5 members, and the average score was used as the score of the evaluation samples.

<Salty taste evaluation points>

1.2% by mass table salt aqueous solution: 7 points (Extremely strong salty taste)
1.0% by mass table salt aqueous solution: 6 points
0.9% by mass table salt aqueous solution: 5 points
0.7% by mass table salt aqueous solution: 4 points (Sufficient salty taste)
0.6% by mass table salt aqueous solution: 3 points
0.5% by mass table salt aqueous solution: 2 points
0.3% by mass table salt aqueous solution: 1 point (Very weak salty taste)

(Umami evaluation)

Sodium glutamate was used as the umami ingredient. Sodium glutamate was dissolved in water to prepare 0.03% by mass sodium glutamate aqueous solution, 0.05% by mass sodium glutamate aqueous solution, 0.06% by mass sodium glutamate aqueous solution, 0.07% by mass sodium glutamate aqueous solution, 0.09% by mass sodium glutamate aqueous solution, 0.10% by mass sodium glutamate aqueous solution, and 0.12% by mass sodium glutamate aqueous solution, respectively, as umami reference solutions. Each umami reference solution was taken into the mouth, and the perceived umami was defined as 1 to 7 points as follows. The evaluation samples were taken into the mouth, and the points were given based on the points of the umami reference solutions. The evaluation was performed by a panel of 5 members, and the average score was used as the score of the evaluation samples.

<Umami evaluation points>

0.12% by mass sodium glutamate aqueous solution: 7 points

(Extremely strong umami)

0.10% by mass sodium glutamate aqueous solution: 6 points
0.09% by mass sodium glutamate aqueous solution: 5 points
0.07% by mass sodium glutamate aqueous solution: 4 points

(Sufficient umami)

0.06% by mass sodium glutamate aqueous solution: 3 points
0.05% by mass sodium glutamate aqueous solution: 2 points
0.03% by mass sodium glutamate aqueous solution: 1 point

(Very weak umami)

[Examples 1-1 to 1-15, Comparative Examples 1-1 to 1-4 (Salty Taste Food and/or Beverages)]
Taste improving agents were prepared by adding myristic acid (manufactured by Tokyo Chemical Industry Co., Ltd.), lauric acid (manufactured by Tokyo Chemical Industry Co., Ltd.), or palmitic acid (manufactured by Tokyo Chemical Industry Co., Ltd.) to purified soybean oil (trade name "Nisshin Soybean Salad Oil (S)", manufactured by The Nisshin OilliO Group, Ltd.) according to the formulations (parts by mass) shown in Tables 1 to 5. Furthermore, the taste improving agents and salty taste aqueous solutions were mixed according to the formulations shown in Tables 1 and 2, and the salty taste evaluation of the obtained food and/or beverages was performed (Examples 1-1 to 1-15). The salty taste aqueous solutions used were 0.3% by mass table salt aqueous solution, 0.5% by mass table salt aqueous solution, 0.6% by mass table salt aqueous solution, 0.7% by mass table salt aqueous solution, and 0.9% by mass table salt aqueous solution, which were the salty taste reference solutions. Also, as Comparative Examples, those not containing fatty acids (Comparative Examples 1-1 to 1-3) and those containing oleic acid (manufactured by Tokyo Chemical Industry Co., Ltd.) (Comparative Example 1-4) were prepared. The results are shown in Tables 1 to 5.

Table 1

Table 1

| | | | Example 1-1 | Example 1-2 | Example 1-3 | Example 1-4 |
|---|---|---|---|---|---|---|
| Formulation Amount | Taste Improving Agent | Myristic Acid | 0.025 | 0.025 | 0.025 | 0.025 |
| | | Purified Soybean Oil | 0.975 | 0.975 | 0.975 | 0.975 |
| | Salty Taste Aqueous Solution | 0.3 Mass% Table Salt Aqueous Solution | 99.000 | - | - | - |
| | | 0.5 Mass% Table Salt Aqueous Solution | - | 99.000 | - | - |
| | | 0.6 Mass% Table Salt Aqueous Solution | - | - | 99.000 | - |
| | | 0.7 Mass% Table Salt Aqueous Solution | - | - | - | 99.000 |
| | | 0.9 Mass% Table Salt Aqueous Solution | - | - | - | - |
| Concentration of linear saturated fatty acids having 12 to 16 carbon atoms, ppm | | | 250 | 250 | 250 | 250 |
| Salty taste ingredient, mass% | | | 0.297 | 0.498 | 0.594 | 0.693 |
| Salty taste evaluation (Difference from salty taste reference solution) | | | 2.0 (+1.0) | 3.0 (+1.0) | 4.0 (+1.0) | 6.0 (+2.0) |

Table 2

Table 2

| | | | Example 1-5 | Comparative Example 1-1 | Comparative Example 1-2 | Comparative Example 1-3 |
|---|---|---|---|---|---|---|
| Formulation Amount | Taste Improving Agent | Myristic Acid | 0.025 | - | - | - |
| | | Oleic Acid | - | - | - | - |
| | | Purified Soybean Oil | 0.975 | 1 | 1 | 1 |
| | Salty Taste Aqueous Solution | 0.3 Mass% Table Salt Aqueous Solution | - | 99 | - | - |
| | | 0.5 Mass% Table Salt Aqueous Solution | - | - | - | - |
| | | 0.6 Mass% Table Salt Aqueous Solution | - | - | - | - |
| | | 0.7 Mass% Table Salt Aqueous Solution | - | - | 99 | - |
| | | 0.9 Mass% Table Salt Aqueous Solution | 99.000 | - | - | 99 |
| Concentration of linear saturated fatty acids having 12 to 16 carbon atoms, ppm | | | 250 | 0 | 0 | 0 |
| Salty taste ingredient, mass% | | | 0.891 | 0.297 | 0.693 | 0.0891 |
| Salty taste evaluation (Difference from salty taste reference solution) | | | 7.0 (+2.0) | 1.0 (0.0) | 4.0 (0.0) | 5.0 (0.0) |

Table 3

Table 3

| | | | Example 1-6 | Example 1-7 | Comparative Example 1-4 |
|---|---|---|---|---|---|
| Formulation Amount | Taste improving Agent | Myristic Acid | - | - | - |
| | | Lauric Acid | 0.025 | - | - |
| | | Palmitic Acid | - | 0.025 | - |
| | | Oleic Acid | - | - | 0.025 |
| | | Purified Soybean Oil | 0.975 | 0.975 | 0.975 |
| | Salty Taste Aqueous Solution | 0.3 Mass% Table Salt Aqueous Solution | - | - | - |
| | | 0.5 Mass% Table Salt Aqueous Solution | - | - | - |
| | | 0.6 Mass% Table Salt Aqueous Solution | - | - | - |
| | | 0.7 Mass% Table Salt Aqueous Solution | 99.000 | 99.000 | 99.000 |
| | | 0.9 Mass% Table Salt Aqueous Solution | - | - | - |
| Concentration of linear saturated fatty acids having 12 to 16 carbon atoms, ppm | | | 250 | 250 | 0 |
| Salty taste ingredient, mass% | | | 0.693 | 0.693 | 0.693 |
| Salty taste evaluation (Difference from salty taste reference solution) | | | 6.0 (+2.0) | 6.0 (+2.0) | 4.0 (0.0) |

Table 4

Table 4

| | | | Example 1-8 | Example 1-9 | Example 1-10 | Example 1-11 |
|---|---|---|---|---|---|---|
| Formulation Amount | Taste Improving Agent | Myristic Acid | 0.001 | 0.0025 | 0.005 | 0.01 |
| | | Purified Soybean Oil | 0.999 | 0.9975 | 0.995 | 0.99 |
| | Salty Taste Aqueous Solution | 0.3 Mass% Table Salt Aqueous Solution | - | - | - | - |
| | | 0.5 Mass% Table Salt Aqueous Solution | - | - | - | - |
| | | 0.6 Mass% Table Salt Aqueous Solution | - | - | - | - |
| | | 0.7 Mass% Table Salt Aqueous Solution | 99.000 | 99.0000 | 99.000 | 99.00 |
| | | 0.9 Mass% Table Salt Aqueous Solution | - | - | - | - |
| Concentration of linear saturated fatty acids having 12 to 16 carbon atoms, ppm | | | 10 | 25 | 50 | 100 |
| Salty taste ingredient, mass% | | | 0.693 | 0.693 | 0.693 | 0.693 |

(continued)

|  | Example 1-8 | Example 1-9 | Example 1-10 | Example 1-11 |
|---|---|---|---|---|
| Salty taste evaluation (Difference from salty taste reference solution) | 4.6 (+0.6) | 5.0 (+1.0) | 5.4 (+1.4) | 5.8 (+1.8) |

Table 5

Table 5

| | | | Example 1-12 | Example 1-13 | Example 1-14 | Example 1-15 |
|---|---|---|---|---|---|---|
| Formulation Amount | Taste Improving Agent | Myristic Acid | 0.05 | 0.1 | 0.25 | 0.5 |
| | | Purified Soybean Oil | 0.95 | 0.9 | 0.75 | 0.5 |
| | Salty Taste Aqueous Solution | 0.3 Mass% Table Salt Aqueous Solution | - | - | - | - |
| | | 0.5 Mass% Table Salt Aqueous Solution | - | - | - | - |
| | | 0.6 Mass% Table Salt Aqueous Solution | - | - | - | - |
| | | 0.7 Mass% Table Salt Aqueous Solution | 99.00 | 99.0 | 99.00 | 99.0 |
| | | 0.9 Mass% Table Salt Aqueous Solution | - | - | - | - |
| Concentration of linear saturated fatty acids having 12 to 16 carbon atoms, ppm | | | 500 | 1000 | 2500 | 5000 |
| Salty taste ingredient, mass% | | | 0.693 | 0.693 | 0.693 | 0.693 |
| Salty taste evaluation (Difference from salty taste reference solution) | | | 6.4 (+2.4) | 6.0 (+2.0) | 5.4 (+1.4) | 4.8 (+0.8) |

As shown in Table 1 to 5, Examples 1-1 to 1-15 had a stronger salty taste than the salty taste aqueous solutions (salty taste reference solutions) that were formulated. Therefore, the salty taste enhancing effect was confirmed. On the other hand, Comparative Examples 1-1 to 1-4 had no difference in salty taste from the salty taste aqueous solutions (salty taste reference solutions) that were formulated.

[Examples 2-1 to 2-5, Comparative Examples 2-1 to 2-2 (Umami Food and/or Beverages)]

Taste improving agents were prepared by adding myristic acid (manufactured by Tokyo Chemical Industry Co., Ltd.) to purified soybean oil (trade name "Nisshin Soybean Salad Oil (S)", manufactured by The Nisshin OilliO Group, Ltd.) according to the formulations (parts by mass) shown in Tables 6 to 9. Furthermore, the taste improving agents and umami aqueous solutions were mixed according to the formulations shown in Tables 6 to 9, and the umami evaluation of the obtained food and/or beverages was performed (Examples 2-1 to 2-5). The umami aqueous solutions used were 0.03% by mass sodium glutamate aqueous solution, 0.05% by mass sodium glutamate aqueous solution, 0.06% by mass sodium glutamate aqueous solution, 0.07% by mass sodium glutamate aqueous solution, and 0.09% by mass sodium glutamate aqueous solution, which were the umami reference solutions. Also, as Comparative Examples, those not containing myristic acid (Comparative Examples 2-1 to 2-2) were prepared. The results are shown in Tables 6 to 9.

Table 6

Table 6

|  |  |  | Example 2-1 | Example 2-2 | Example 2-3 | Example 2-4 |
|---|---|---|---|---|---|---|
| Formulation Amount | Taste Improving Agent | Myristic Acid | 0.025 | 0.025 | 0.025 | 0.025 |
|  |  | Purified Soybean Oil | 0.975 | 0.975 | 0.975 | 0.975 |
|  | Umami Aqueous Solution | 0.03 Mass% Glutamic Acid Aqueous Solution | 99.000 | - | - | - |
|  |  | 0.05 Mass% Glutamic Acid Aqueous Solution | - | 99.000 | - | - |
|  |  | 0.06 Mass% Glutamic Acid Aqueous Solution | - | - | 99.000 | - |
|  |  | 0.07 Mass% Glutamic Acid Aqueous Solution | - | - | - | 99.000 |
|  |  | 0.09 Mass% Glutamic Acid Aqueous Solution | - | - | - | - |
| Concentration of linear saturated fatty acids having 12 to 16 carbon atoms, ppm |  |  | 250 | 250 | 250 | 250 |
| Umami ingredient, mass% |  |  | 0.030 | 0.050 | 0.059 | 0.069 |
| Umami evaluation (Difference from umami reference solution) |  |  | 2.0 (+1.0) | 3.0 (+1.0) | 4.0 (+1.0) | 6.0 (+2.0) |

Table 7

Table 7

|  |  |  | Example 2-5 | Comparative Example 2-1 | Comparative Example 2-2 |
|---|---|---|---|---|---|
| Formulation Amount | Taste Improving Agent | Myristic Acid | 0.025 | - | - |
|  |  | Purified Soybean Oil | 0.975 | 1 | 1 |
|  | Umami Aqueous Solution | 0.03 Mass% Glutamic Acid Aqueous Solution | - | 99.000 | - |
|  |  | 0.05 Mass% Glutamic Acid Aqueous Solution | - | - | - |
|  |  | 0.06 Mass% Glutamic Acid Aqueous Solution | - | - | - |
|  |  | 0.07 Mass% Glutamic Acid Aqueous Solution | - | - | - |
|  |  | 0.09 Mass% Glutamic Acid Aqueous Solution | 99.000 | - | 99.000 |
| Concentration of linear saturated fatty acids having 12 to 16 carbon atoms, ppm |  |  | 250 | 0 | 0 |
| Umami ingredient, mass% |  |  | 0.089 | 0.030 | 0.089 |
| Umami evaluation (Difference from umami reference solution) |  |  | 7.0 (+2.0) | 1.0 (0.0) | 5.0 (0.0) |

Table 8

Table 8

|  |  |  | Example 2-6 | Example 2-7 | Example 2-8 | Example 2-9 |
|---|---|---|---|---|---|---|
| Formulation Amount | Taste Improving Agent | Myristic Acid | 0.001 | 0.0025 | 0.005 | 0.01 |
|  |  | Purified Soybean Oil | 0.999 | 0.9975 | 0.995 | 0.99 |
|  | Umami Aqueous Solution | 0.03 Mass% Glutamic Acid Aqueous Solution | - | - | - | - |
|  |  | 0.05 Mass% Glutamic Acid Aqueous Solution | - | - | - | - |
|  |  | 0.06 Mass% Glutamic Acid Aqueous Solution | - | - | - | - |
|  |  | 0.07 Mass% Glutamic Acid Aqueous Solution | 99.000 | 99.0000 | 99.000 | 99.00 |
|  |  | 0.09 Mass% Glutamic Acid Aqueous Solution | - | - | - | - |
| Concentration of linear saturated fatty acids having 12 to 16 carbon atoms, ppm |  |  | 10 | 25 | 50 | 100 |

(continued)

|  | Example 2-6 | Example 2-7 | Example 2-8 | Example 2-9 |
|---|---|---|---|---|
| Umami ingredient, mass% | 0.069 | 0.069 | 0.069 | 0.069 |
| Umami evaluation (Difference from umami reference solution) | 4.6 (+0.4) | 5.0 (+1.0) | 5.0 (+1.0) | 5.8 (+1.8) |

Table 9

Table 9

| | | | Example 2-10 | Example 2-11 | Example 2-12 | Example 2-13 |
|---|---|---|---|---|---|---|
| Formulation Amount | Taste Improving Agent | Myristic Acid | 0.05 | 0.1 | 0.25 | 0.5 |
| | | Purified Soybean Oil | 0.95 | 0.9 | 0.75 | 0.5 |
| | Umami Aqueous Solution | 0.03 Mass% Glutamic Acid Aqueous Solution | - | - | - | - |
| | | 0.05 Mass% Glutamic Acid Aqueous Solution | - | - | - | - |
| | | 0.06 Mass% Glutamic Acid Aqueous Solution | - | - | - | - |
| | | 0.07 Mass% Glutamic Acid Aqueous Solution | 99.00 | 99.0 | 99.00 | 99.0 |
| | | 0.09 Mass% Glutamic Acid Aqueous Solution | - | - | - | - |
| Concentration of linear saturated fatty acids having 12 to 16 carbon atoms, ppm | | | 500 | 1000 | 2500 | 5000 |
| Umami ingredient, mass% | | | 0.069 | 0.069 | 0.069 | 0.069 |
| Umami evaluation (Difference from umami reference solution) | | | 6.4 (+2.4) | 6.0 (+2.0) | 5.4 (+1.4) | 4.8 (+0.8) |

As shown in Tables 6 to 9, Examples 2-1 to 2-13 had a stronger umami tast than the umami aqueous solutions (umami reference solutions) that were formulated. On the other hand, Comparative Examples 2-1 to 2-2 had no difference in umami taste from the umami aqueous solutions (umami reference solutions) that were formulated.

[Examples 3-1 to 3-3 (Salty Taste Food and/or Beverages)]

Taste improving agents were prepared by adding myristic acid (manufactured by Tokyo Chemical Industry Co., Ltd.) and emulsifiers to purified soybean oil (trade name "Nisshin Soybean Salad Oil (S)", manufactured by The Nisshin OilliO Group, Ltd.) according to the formulations (parts by mass) shown in Table 10. Furthermore, the taste improving agents and salty taste aqueous solution (0.7% by mass table salt aqueous solution, which was the reference solution) were mixed according to the formulations shown in Table 10, and the salty taste evaluation of the obtained food and/or beverages was performed (Examples 3-1 to 3-3). The emulsifiers used were polyglycerol condensed ricinoleic acid ester ("Sunsoft No. 818H", manufactured by Taiyo Kagaku Co., Ltd., HLB about 2), sucrose erucic acid ester ("RYOTO Sugar Ester ER-290", manufactured by Mitsubishi Chemical Corporation, HLB 2), and hexaglycerol trioleic acid ester ("Sunsoft A-173E", manufactured by Taiyo Kagaku Co., Ltd., HLB 7). The results are shown in Table 10.

Table 10

Table 10

| | | | Example 3-1 | Example 3-2 | Example 3-3 |
|---|---|---|---|---|---|
| Formulation Amount | Taste Improving Agent | Myristic Acid | 0.025 | 0.025 | 0.025 |
| | | Polyglycerol Condensed Ricinoleic Acid Ester | 0.100 | - | - |
| | | Sucrose Erucic Acid Ester | - | 0.100 | - |
| | | Hexaglycerol Trioleic Acid Ester | - | - | 0.100 |
| | | Purified Soybean Oil | 0.875 | 0.875 | 0.875 |
| | Salty Taste Aqueous Solution | 0.3 Mass% Table Salt Aqueous Solution | - | - | - |
| | | 0.5 Mass% Table Salt Aqueous Solution | - | - | - |
| | | 0.6 Mass% Table Salt Aqueous Solution | - | - | - |
| | | 0.7 Mass% Table Salt Aqueous Solution | 99.000 | 99.000 | 99,000 |
| | | 0.9 Mass% Table Salt Aqueous Solution | - | - | - |
| Concentration of linear saturated fatty acids having 12 to 16 carbon atoms, ppm | | | 250 | 250 | 250 |
| Salty taste ingredient, mass% | | | 0.693 | 0.693 | 0.693 |
| Salty taste evaluation (Difference from salty taste reference solution) | | | 7.0 (+3.0) | 6.4 (+2.4) | 6.0 (+2.0) |

As shown in Table 10, Examples 3-1 to 3-3 had a stronger salty taste than the salty taste aqueous solution (0.7% by mass table salt aqueous solution) that was formulated. Examples 3-1 and 3-2, which contained emulsifiers with HLB of 4.5 or less, had a stronger salty taste than Example 1-4, which did not contain emulsifiers. On the other hand, Example 3-3, which contained an emulsifier with HLB of 7, had the same level of salty taste as Example 1-4.

[Example 4]

Compositions (taste improving agents) 4-1 to 4-3 were prepared by adding myristic acid (manufactured by Tokyo Chemical Industry Co., Ltd.) and polyglycerol condensed ricinoleic acid ester ("Sunsoft No. 818H", manufactured by Taiyo Kagaku Co., Ltd., HLB about 2) to purified soybean oil (trade name "Nisshin Soybean Salad Oil (S)", manufactured by The Nisshin OilliO Group, Ltd.) according to the formulations (parts by mass) shown in Table 11.

Using Compositions 4-1 to 4-3, cooked foods (crab in tomato cream sauce, white sauce, cabbage stir-fried with cumin, potatoes stir-fried with curry, fried rice, corn soup, wakame seaweed soup, shrimp pilaf) were prepared, and the taste evaluation of salty taste and umami was performed.

The standard for salty taste and umami was set by using the cooked foods (crab in tomato cream sauce, white sauce, cabbage stir-fried with cumin, potatoes stir-fried with curry, fried rice, corn soup, wakame seaweed soup, shrimp pilaf) prepared using Composition 4-1 as the standard taste cooked foods, and the salty taste and umami of the standard taste cooked foods were each set as 3 points. The evaluation was performed by a panel of 5 members, and the evaluation was conducted while discussing with each other so that there was no individual difference in the evaluation points, and the average score was used as the score of the evaluation samples.

\<Salty taste evaluation points\>

6 points: Extremely stronger salty taste than the standard taste cooked foods
5 points: Stronger salty taste than the standard taste cooked foods
4 points: Slightly stronger salty taste than the standard taste cooked foods
3 points: Same level of salty taste as the standard taste cooked foods
2 points: Slightly weaker salty taste than the standard taste cooked foods 1 point: Weaker salty taste than the standard taste cooked foods

\<Umami evaluation points\>

6 points: Extremely stronger umami than the standard taste cooked foods
5 points: Stronger umami than the standard taste cooked foods
4 points: Slightly stronger umami than the standard taste cooked foods
3 points: Same level of umami as the standard taste cooked foods
2 points: Slightly weaker umami than the standard taste cooked foods
1 point: Weaker umami than the standard taste cooked foods

(Crab in Tomato Cream Sauce)

Composition 4-1 or 4-2 (3.32 parts by mass) and thinly sliced onions (10.37 parts by mass) were added to a heated pot and sauteed for 5 minutes without burning. Furthermore, tomatoes (processed product: "Rich Aragoshi Tomato", manufactured by Kagome Co., Ltd.) (51.85 parts by mass), sauce ("American Sauce", sold by Heinz Japan Ltd.) (8.30 parts by mass), table salt (0.66 parts by mass), and crab ("Maru-zuwaigani Hogushimi", manufactured by Maruha Nichiro Corporation) (15.14 parts by mass) were added and heated (for 3 minutes after boiling). After making it into a smooth paste with a hand blender, fresh cream (35% milk fat) (10.37 parts by mass) was added and heated to 80°C while stirring to obtain crab in tomato cream sauce. The obtained sauce was filled in a nylon-poly bag ("Nylon-Poly Barrier ONY/L-LD No. 7B", manufactured by Fukusuke Kogyo Co., Ltd.) and cooled rapidly in ice water.

(White Sauce)

Any one of Compositions 4-1 to 4-3 (6.0 parts by mass) was heated in a pot, and weak flour (5.5 parts by mass) was roasted over low heat for 1 minute. Furthermore, milk (3.7% milk fat) (88.0 parts by mass) and table salt (0.5 parts by mass) were added, and the mixture was heated over low heat for 2 minutes while mixing with a wooden spatula, and then heated over low heat for 2 minutes while mixing with a whisk. After filtering, it was cooled to obtain white sauce.

(Cabbage Stir-Fried with Cumin)

Composition 4-1 or 4-2 (11.0 parts by mass) was put in a frying pan and warmed, and cut cabbage (87.4 parts by mass) was added and stir-fried for 3 minutes. Furthermore, cumin ("Cumin (Powder)", manufactured by S&B Foods Inc.) (0.8 parts by mass) and table salt (0.65 parts by mass) were added and stir-fried for 30 seconds to obtain cabbage stir-fried with cumin.

(Potatoes Stir-Fried with Curry)

Composition 4-1 or 4-2 (8.5 parts by mass) and curry powder (manufactured by S&B Foods Inc.) (1.0 parts by mass) were put in a frying pan and heated over low to medium heat for 3 minutes. Sliced onions (15.0 parts by mass) were added and heated over low heat for 3 minutes, and table salt was added and mixed. Furthermore, potatoes that had been heated in advance in a microwave oven were added and heated over low to medium heat for 3 minutes to obtain potatoes stir-fried with curry.

(Fried Rice)

Composition 4-1 or 4-2 (3.55 parts by mass), Welsh onions cut into rings (about 1 mm width) (3.50 parts by mass), roasted pork cut into cubes (about 5 mm), and beaten eggs were added to a heated frying pan in this order and stir-fried for 1 minute. Cooked rice (69.00 parts by mass) was added and stir-fried for 1.5 minutes. Furthermore, table salt (0.35 parts by mass), pepper (0.05 parts by mass), and dark soy sauce (1.00 parts by mass) were added and stir-fried for 1 minute to obtain fried rice.

(Corn Soup)

Powdered soup ("Seven & i Premium Corn Potage", manufactured by Pokka Sapporo Food & Beverage Ltd.) (17.6 g) was added to 150 ml of hot water at 90°C and mixed, and then the solids were removed with a sieve. Composition 4-1 or 4-2 (0.04 g) was added to 10 ml of the obtained liquid and mixed to obtain corn soup.

(Wakame Seaweed Soup)

Powdered soup ("Seven & i Premium Marugoto Wakame Soup", manufactured by Riken Vitamin Co., Ltd.) (6.2 g) was added to 180 ml of hot water at 90°C and mixed, and then the solids were removed with a sieve. Composition 4-1 or 4-2 (0.04 g) was added to 10 ml of the obtained liquid and mixed to obtain wakame seaweed soup.

(Shrimp Pilaf)

Any one of Compositions 4-1 to 4-3 (4.5 g) was sprayed on frozen shrimp pilaf ("Shrimp Pilaf", manufactured by Nichirei Foods Inc.) (450 g). It was then heated in a microwave oven (600 W) for 6.5 minutes and mixed to obtain shrimp pilaf.

Table 11

|  | Composition 4-1 | Composition 4-2 | Composition 4-3 |
|---|---|---|---|
| Purified Soybean Oil | 100 | 99.0 | 98.5 |
| Myristic Acid | 0 | 1.0 | 1.0 |
| Polyglycerol Condensed Ricinoleic Acid Ester | 0 | 0.0 | 0.5 |

Table 12

Table 12

|  | Salty Taste Evaluation Points | | | Umami Evaluation Points | | |
|---|---|---|---|---|---|---|
|  | Composition 4-1 | Composition 4-2 | Composition 4-3 | Composition 4-1 | Composition 4-2 | Composition 4-3 |
| Crab in Tomato Cream Sauce | 3.0 | 4.2 | - | 3.0 | 4.2 | - |
| White Sauce | 3.0 | 4.6 | 5.4 | 3.0 | 4.2 | 5.0 |
| Cabbage Stir-fried with Cumin | 3.0 | 4.0 | - | 3.0 | 4.0 | - |
| Potatoes Stir-fried with Curry | 3.0 | 4.0 | - | 3.0 | 4.0 | - |
| Fried Rice | 3.0 | 4.6 | - | 3.0 | 4.8 | - |
| Corn Soup | 3.0 | 4.0 | - | 3.0 | 4.0 | - |

(continued)

| | Salty Taste Evaluation Points | | | Umami Evaluation Points | | |
|---|---|---|---|---|---|---|
| | Composition 4-1 | Composition 4-2 | Composition 4-3 | Composition 4-1 | Composition 4-2 | Composition 4-3 |
| Wakame Seaweed Soup | 3.0 | 3.8 | - | 3.0 | 4.0 | - |
| Shrimp Pilaf | 3.0 | 5.0 | 5.6 | 3.0 | 5.0 | 5.6 |

As shown in Table 12, the cooked foods prepared using Composition 4-2 and Composition 4-3 had a stronger salty taste and umami than the standard taste cooked foods prepared using Composition 4-1. Furthermore, the cooked foods prepared using Composition 4-3 had an even stronger salty taste and umami than the cooked foods prepared using Composition 4-2.

**Claims**

1.   A taste improving agent for food and/or beverages having a salty taste and/or umami, comprising: a linear saturated fatty acid having 12 to 16 carbon atoms as an active ingredient.

2.   The taste improving agent according to claim 1, wherein a content of the linear saturated fatty acid having 12 to 16 carbon atoms is 0.1 to 100% by mass relative to a total mass of the taste improving agent.

3.   The taste improving agent according to claim 1 or 2, further comprising: an emulsifier having an HLB of 4.5 or less.

4.   The taste improving agent according to any one of claims 1 to 3, wherein the taste is a salty taste and/or umami.

5.   Taste-improved food and/or beverages, comprising food and/or beverages having a salty taste and/or umami and the taste improving agent according to any one of claims 1 to 4.

6.   The taste-improved food and/or beverages according to claim 5, wherein a content of the linear saturated fatty acid having 12 to 16 carbon atoms is 8 to 7000 ppm by mass relative to a total mass of the taste-improved food and/or beverages.

7.   The taste-improved food and/or beverages according to claim 5 or 6, wherein the taste is a salty taste and/or umami.

8.   A method for improving the taste of food and/or beverages, comprising: adding a linear saturated fatty acid having 12 to 16 carbon atoms to food and/or beverages having a salty taste and/or umami.

9.   The method for improving the taste of food and/or beverages according to claim 8, wherein the amount of the linear saturated fatty acid having 12 to 16 carbon atoms to be added is 8 to 7000 ppm by mass relative to a total mass of the taste-improved food and/or beverages after the addition of the linear saturated fatty acid.

10.   The method for improving the taste of food and/or beverages according to claim 8 or 9, further comprising: adding an emulsifier having an HLB of 4.5 or less to the food and/or beverages having a salty taste and/or umami.

11.   The method for improving taste according to any one of claims 8 to 10, wherein the taste is a salty taste and/or umami.

12.   A method for manufacturing taste-improved food and/or beverages, comprising: adding a linear saturated fatty acid having 12 to 16 carbon atoms to food and/or beverages having a salty taste and/or umami so as to prepare the taste-improved food and/or beverages.

13.   The manufacturing method according to claim 12, wherein the amount of the linear saturated fatty acid having 12 to 16 carbon atoms to be added is 8 to 7000 ppm by mass relative to a total mass of the taste-improved food and/or beverages.

14. The manufacturing method according to claim 12 or 13, further comprising: adding an emulsifier having an HLB of 4.5 or less to the food and/or beverages having a salty taste and/or umami.

15. The manufacturing method according to any one of claims 12 to 14, wherein the taste is a salty taste and/or umami.

**EP 4 449 886 A1**

# INTERNATIONAL SEARCH REPORT

International application No.

**PCT/JP2022/045890**

### A. CLASSIFICATION OF SUBJECT MATTER

*A23L 27/00*(2016.01)i; *A23L 5/00*(2016.01)i
FI: A23L27/00 Z; A23L5/00 H

According to International Patent Classification (IPC) or to both national classification and IPC

### B. FIELDS SEARCHED

Minimum documentation searched (classification system followed by classification symbols)

A23L27/00-27/60; A23L5/00-5/49

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); FSTA/CAplus/AGRICOLA/BIOSIS/MEDLINE/EMBASE (STN)

### C. DOCUMENTS CONSIDERED TO BE RELEVANT

| Category* | Citation of document, with indication, where appropriate, of the relevant passages | Relevant to claim No. |
|---|---|---|
| X | JP 2015-27274 A (SANEI GEN FFI INC) 12 February 2015 (2015-02-12) paragraphs [0068]-[0073], [0027]-[0029] | 1-15 |
| A | JP 2006-262896 A (SHOWA SANGYO CO LTD) 05 October 2006 (2006-10-05) claims, examples | 1-15 |
| A | WO 2020/255784 A1 (J-OIL MILLS, INC.) 24 December 2020 (2020-12-24) claims, examples | 1-15 |
| P, X | JP 2022-18627 A (J-OIL MILLS, INC.) 27 January 2022 (2022-01-27) claims, examples | 1-15 |
| P, X | JP 2022-92532 A (J-OIL MILLS, INC.) 22 June 2022 (2022-06-22) claims, examples | 1-15 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 January 2023** | **07 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

International application No.

**PCT/JP2022/045890**

| Patent document cited in search report | | | Publication date (day/month/year) | Patent family member(s) | Publication date (day/month/year) |
|---|---|---|---|---|---|
| JP | 2015-27274 | A | 12 February 2015 | (Family: none) | |
| JP | 2006-262896 | A | 05 October 2006 | (Family: none) | |
| WO | 2020/255784 | A1 | 24 December 2020 | TW 202114537 A claims, examples | |
| JP | 2022-18627 | A | 27 January 2022 | (Family: none) | |
| JP | 2022-92532 | A | 22 June 2022 | (Family: none) | |

Form PCT/ISA/210 (patent family annex) (January 2015)

**REFERENCES CITED IN THE DESCRIPTION**

**Patent documents cited in the description**

- JP 2002345430 A